# EUROPEAN PATENT SPECIFICATION

(11) **EP 3 067 895 B1**
(45) Date of publication and mention of the grant of the patent: **06.12.2017**
(21) Application number: 16159083.1
(22) Date of filing: 08.03.2016
(51) Int. Cl.: G21C 9/016, G21C 15/18

(54) **PRIMARY CONTAINMENT VESSEL**
PRIMÄRER SICHERHEITSBEHÄLTER
CUVE DE CONFINEMENT PRIMAIRE

(30) Priority: 09.03.2015 JP 2015046029
(43) Date of publication of application: 14.09.2016
(73) Proprietor: Hitachi-GE Nuclear Energy, Ltd., Hitachi-shi Ibaraki 317-0073 (JP)
(72) Inventor: YAMADA, Takeshi, Hitachi-shi, Ibaraki 317-0073 (JP); SAKAI, Takeshi, Hitachi-shi, Ibaraki 317-0073 (JP); FUJII, Tadashi, Hitachi-shi, Ibaraki 317-0073 (JP)
(74) Representative: Moore, Graeme Patrick

(56) References cited:
- JP-A- 2010 237 070
- US-A- 5 307 390
- US-A1- 2010 329 409

## Description

### Technical Field

The present invention relates to a primary containment vessel and particularly relates to a primary containment vessel including a pedestal for supporting a reactor pressure vessel.

### Background Art

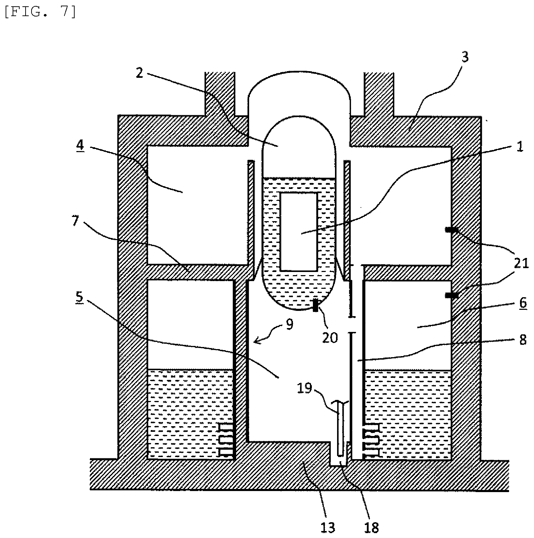

If, by any chance, a serious accident occurs and radioactive substances in a reactor core are discharged from a reactor pressure vessel, a primary containment vessel of a nuclear power plant prevents the radioactive substances from leaking into an area in the vicinity of a site of the plant. Fig. 7 is a vertical sectional view of a primary containment vessel of an advanced boiling water reactor (ABWR) as an example of a primary containment vessel of a boiling water reactor (BWR). In Fig. 7, a primary containment vessel 3 is made of reinforced concrete, which is lined with a steel sheet made of steel, and includes: a reactor pressure vessel 2 in which a reactor core 1 for holding a fuel of a reactor is located; a tubular pedestal 9 for supporting the reactor pressure vessel 2; a lower drywell 5 positioned to be lower than the reactor pressure vessel 2 and formed on an inner side in a radial direction of the pedestal 9; an upper drywell 4 located on an outer side in a radial direction of the reactor pressure vessel 2 and separated from the lower drywell 5 by a diaphragm floor 7; and a suppression chamber 6 for storing coolant (cooling water), the suppression chamber 6 being located to be lower than the upper drywell 4 on an outer side in the radial direction of the pedestal 9. The upper drywell 4, the lower drywell 5, and the suppression chamber 6 communicate to one another via a vent pipe 8 formed in the pedestal 9.

A drain sump 18 is formed by digging down a part of a lower drywell floor concrete 13. Cooling water leaking in the primary containment vessel 3 is collected to the drain sump 18 via drain piping 19 communicating to various parts in the primary containment vessel 3. A leakage detector (not illustrated) is provided in a pit of the drain sump 18, and leakage of the cooling water is detected by detecting a water level in the drain sump 18 with the use of this leakage detector.

In the case where part of the reactor pressure vessel 2 or pipes of a cooling system in the primary containment vessel configured as described above is damaged for some reason and steam is discharged into the upper drywell 4, the discharged steam is introduced into water in the suppression chamber 6 via the vent pipe 8 and is condensed therein, which results in suppression of increase in a pressure in the primary containment vessel 3.

Further, in the case where a loss of coolant accident or a reactor core isolation event occurs, a fuel in the reactor pressure vessel 2 is cooled by automatically starting a reactor core isolation cooling system (RCIC) or an emergency core cooling system (ECCS). Those cooling systems are designed to have redundancy, diversity, and independence, and therefore possibility of simultaneously losing functions of all the cooling systems is extremely low. However, it is desirable to take safety measures assuming that the functions of all the cooling systems are lost and recovery of the functions is remarkably delayed.

If the functions of all the cooling systems are lost, a water level in the reactor pressure vessel 2 is gradually reduced. In the case where the water level becomes lower than an upper end of the fuel, a temperature of an exposed fuel becomes higher than a saturation temperature. In the case where the water level is further reduced to reach a lower end of the fuel, a cooling effect of the fuel is remarkably reduced, and therefore there is a possibility that a molten fuel is accumulated on a bottom of the reactor pressure vessel 2 from the reactor core 1 depending on progress of an accident event thereafter. In the case where more severe progress of the accident event is assumed, it is expected that the molten fuel falls through the bottom of the reactor pressure vessel 2 and expands on a floor surface of the lower drywell 5.

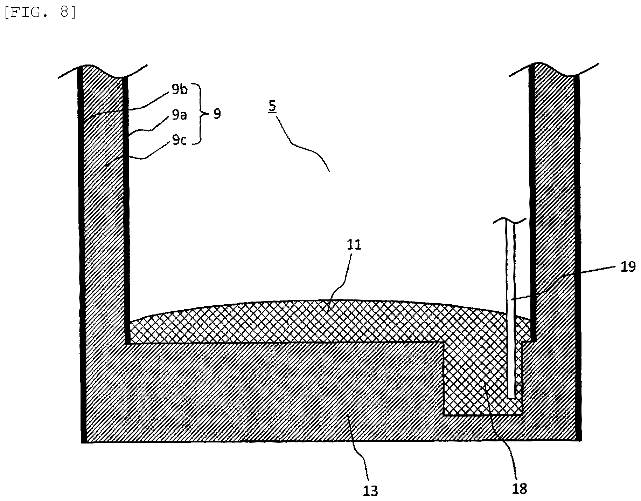

Fig. 8 is an enlarged view of the lower drywell. In Fig. 8, the pedestal 9 for supporting the reactor pressure vessel 2 (see Fig. 7) includes a pedestal internal tubular steel plate 9a, a pedestal external tubular steel plate 9b, and pedestal concrete 9c filled therebetween and strength thereof is secured by the pedestal internal tubular steel plate 9a and the pedestal external tubular steel plate 9b. Therefore, when a high-temperature molten fuel 11 expanding on the lower drywell floor concrete 13 is brought into contact with the lower drywell floor concrete 13 and the pedestal internal tubular steel plate 9a to melt them, a function of supporting the reactor pressure vessel 2 may be reduced. Accordingly, the primary containment vessel 3 is desired to have a structure capable of protecting the lower drywell floor concrete 13 and the pedestal internal tubular steel plate 9a from heat of the molten fuel 11 falling in the lower drywell 5. PTL 1 discloses an example of a reactor primary containment vessel having such a structure.

In the primary containment vessel disclosed in PTL 1, a core catcher 10 is provided on a floor of a lower drywell 5, and cooling water channels 11A and 11B via which water in a pressure suppression pool 7 is circulated and supplied are formed between this core catcher 10 and a side wall surface and a floor surface of the lower drywell 5. In the case where the core catcher 10 receives a molten fuel, heat of the molten fuel is transmitted to cooling water filled in the cooling water channels 11A and 11B, and therefore a bottom surface and a side surface of the core catcher 10 are cooled and a temperature of the cooling water is increased. The cooling water that has become light because of increase in the temperature is discharged into the pressure suppression pool 7 via the upper cooling water channel 11B and a communication tube 13, and the water in the pressure suppression pool 7 flows into the lower cooling water channel 11A via a communication tube 12 because of a difference in hydraulic head. Thus, strength of a pedestal 3 can be maintained by naturally circulating the water in the pressure suppression pool 7 via the cooling water channels 11A and 11B and cooling the bottom surface and the side surface of the core catcher 10 to thereby prevent the heat of the molten fuel from being transmitted to the floor surface and the side wall surface of the lower drywell. JP2010-237070-A discloses a leakage water collector and leakage monitoring method for nuclear power plant, comprising in particular a primary containment vessel according to the preamble of claim 1. US2010/0329409-A1 discloses a drain sump of nuclear reactor containment vessel.
US5307390-A discloses a corium protection assembly.

### Citation List

### Patent Literature

PTL 1: JP-A-2008-241657

### Summary of Invention

### Technical Problem

However, in the primary containment vessel disclosed in PTL 1, the cooling water channels 11A and 11B formed between the floor surface of the lower drywell 5 and a side surface of the pedestal 3 and the core catcher 10 are always filled with cooling water supplied from the pressure suppression pool 7, and therefore a drain sump for collecting leaking water in the primary containment vessel cannot be provided on the floor surface of the lower drywell 5.

The invention has been made in view of the above problem, and an object thereof is to provide a primary containment vessel including a drain sump for collecting leaking water in the primary containment vessel and capable of maintaining a function of supporting a reactor pressure vessel by protecting a pedestal from a molten fuel falling in a lower drywell at the time of occurrence of a serious accident.

### Solution to Problem

In order to solve the above problem, it is provided reactor pressure vessel according to claim 1.

In the invention configured as described above, the primary containment vessel including the drain sump for collecting leaking water in the primary containment vessel can protect the pedestal from heat of a molten fuel by receiving the molten fuel falling in the lower drywell with the use of a heat-resisting protection material and injecting water into the floor surface gap and the wall surface gap at the time of occurrence of a serious accident.

### Advantageous Effects of Invention

According to the invention, a primary containment vessel including a drain sump for collecting leaking water in the primary containment vessel can maintain a function of supporting a reactor pressure vessel 2 by protecting a pedestal from heat of a molten fuel falling in a lower drywell at the time of occurrence of a serious accident.

### Brief Description of Drawings

[Fig. 1] Fig. 1 is a vertical sectional view of a primary containment vessel according to Example 1 of the invention.
[Fig. 2] Fig. 2 is a vertical sectional view of a lower drywell according to Example 1 of the invention.
[Fig. 3] Fig. 3 is a top view of a lower drywell according to Example 1 of the invention.
[Fig. 4] Fig. 4 is a vertical sectional view of a lower drywell according to Example 2 of the invention.
[Fig. 5] Fig. 5 is a vertical sectional view of a lower drywell according to Example 3 of the invention.
[Fig. 6] Fig. 6 is a vertical sectional view of a lower drywell according to Example 4 of the invention.
[Fig. 7] Fig. 7 is a vertical sectional view of a primary containment vessel according to a related art.
[Fig. 8] Fig. 8 is a vertical sectional view of a lower drywell according to the related art.

### Description of Embodiments

Examples of the invention will be described below with reference to drawings. Note that the same or corresponding parts in the drawings are denoted by the same reference signs and repeated description thereof is omitted as appropriate.

### [Example 1]

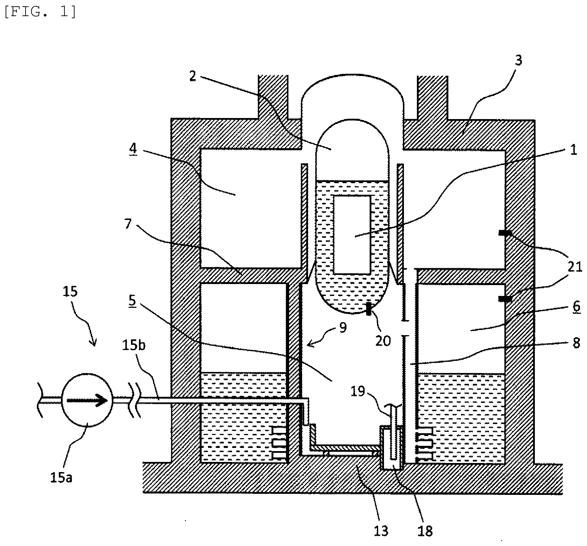

Fig. 1 is a vertical sectional view of a primary containment vessel of an advanced boiling water reactor (ABWR) according to Example 1 of the invention. In Fig. 1, a primary containment vessel 3 is made of reinforced concrete, which is lined with a steel sheet made of steel, and includes: a reactor pressure vessel 2 in which a reactor core 1 for holding a fuel of a reactor is located; a tubular pedestal 9 for supporting the reactor pressure vessel 2; a lower drywell 5 positioned to be lower than the reactor pressure vessel 2 and formed to be surrounded by the pedestal 9; an upper drywell 4 located on an outer side in a radial direction of the reactor pressure vessel 2 and separated from the lower drywell 5 by a diaphragm floor 7; and a suppression chamber 6 for storing coolant, the suppression chamber 6 being located to be lower than the upper drywell 4 on an outer side in a radial direction of the pedestal 9.

The upper drywell 4, the lower drywell 5, and the suppression chamber 6 communicate to one another via a vent pipe 8 formed in the pedestal 9. In the case where part of the reactor pressure vessel 2 or pipes of a cooling system is damaged for some reason and steam is discharged into the upper drywell 4, the discharged steam is introduced into water in the suppression chamber 6 via the vent pipe 8 and is condensed therein, which results in suppression of increase in a pressure in the primary containment vessel 3.

A drain sump 18 is formed by digging down a part of a lower drywell floor concrete 13. Cooling water leaking in the primary containment vessel 3 is collected to the drain sump 18 via drain piping 19 communicating to various parts in the primary containment vessel 3. A leakage detector (not illustrated) is provided in a pit of the drain sump 18, and leakage of the cooling water is detected by detecting a water level in the drain sump 18 with the use of this leakage detector.

In the case where a loss of coolant accident or a reactor core isolation event occurs, a fuel in the reactor pressure vessel 2 is cooled by automatically starting a reactor core isolation cooling system (RCIC) or an emergency core cooling system (ECCS) (not illustrated). Those cooling systems are designed to have redundancy, diversity, and independence, and therefore possibility of simultaneously losing functions of all the cooling systems is extremely low.

Assuming that the functions of all the cooling systems are lost and recovery of the functions is remarkably delayed, it is expected that a molten fuel falls through the bottom of the reactor pressure vessel 2. The reactor pressure vessel 2 according to this example has a mechanism for protecting the pedestal 9 from heat of the molten fuel falling in the lower drywell 5. This point will be described in detail below.

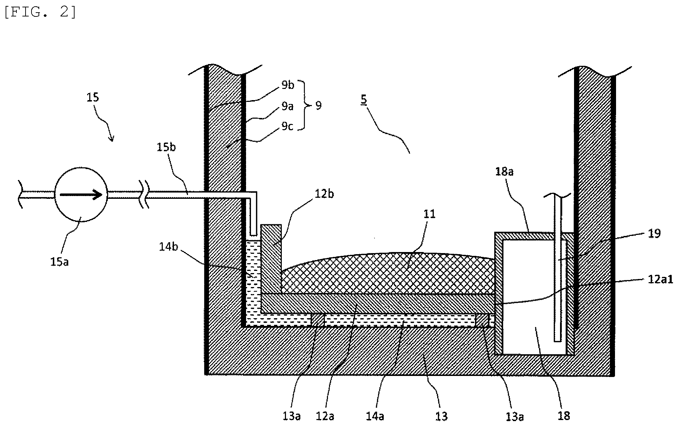

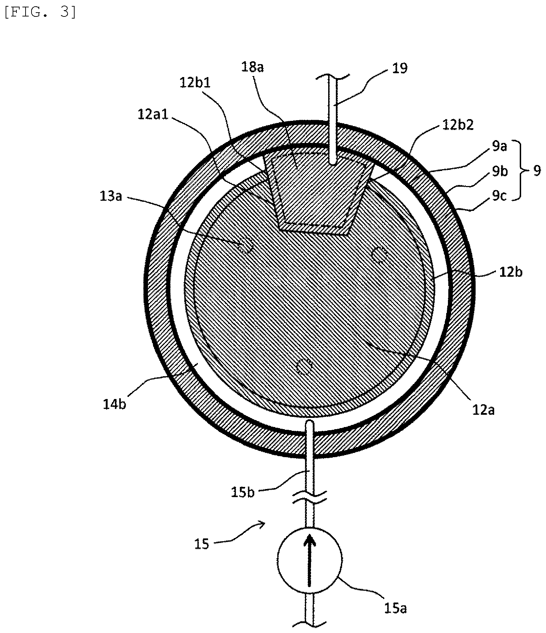

Fig. 2 and Fig. 3 illustrate a vertical sectional view and a top view, respectively, of the lower drywell 5 according to this example. In Fig. 2 or Fig. 3, the pedestal 9 for supporting the reactor pressure vessel 2 (see Fig. 1) includes a pedestal internal tubular steel plate 9a, a pedestal external tubular steel plate 9b, and pedestal concrete 9c filled therebetween.

On the lower drywell floor concrete 13, a heat-resisting floor protection material 12a that has a diameter smaller than that of the pedestal internal tubular steel plate 9a and has a substantially circular plate shape having a cutout portion above the drain sump 18 is supported by a support member 13a, and a floor surface gap 14a is formed between the lower drywell floor concrete 13 and the floor protection material 12a. A heat-resisting wall protection material 12b is erected on a circular peripheral portion of the floor protection material 12a, and a wall surface gap 14b is formed between the pedestal internal tubular steel plate 9a and the wall protection material 12b. The drain sump 18 is covered by a heat-resisting sump cover 18a above the floor protection material 12a. A side surface portion of the sump cover 18a abuts against a cutout end surface 12a1 of the floor protection material 12a and side end surfaces 12b1 and 12b2 of the wall protection material 12b. The drain piping 19 is attached to be inserted through a hole formed in an upper surface portion of the sump cover 18a. The protection materials 12a and 12b and the sump cover 18a may be constituted by a monolayer mainly made of one of ceramics such as alumina and zirconia, a carbonized material such as silicon carbide, and a refractory material such as tungsten or may be constituted by a multilayer made of a plurality of materials selected therefrom in combination.

A water injection mechanism 15 for injecting cooling water into the lower drywell 5 is provided to the pedestal 9. The water injection mechanism 15 includes a water injection pump 15a for absorbing cooling water having a sufficient flow rate from the suppression chamber 6 or an external water source (not illustrated) and discharging the cooling water and a water injection line 15b for introducing the cooling water discharged from this water injection pump 15a to the wall surface gap 14b. Note that, although only one water injection line 15b is illustrated in Fig. 2, the water injection line 15b is not limited to one and a plurality of water injection lines 15b may be provided at predetermined intervals in a circumferential direction of the pedestal 9.

In the primary containment vessel 3 configured as described above, because the protection materials 12a and 12b and the side surface portion of the sump cover 18a integrally receive the molten fuel 11 falling in the lower drywell 5, it is possible to prevent the molten fuel 11 from being brought into contact with the lower drywell floor concrete 13 and the pedestal internal tubular steel plate 9a and from flowing into the pit of the drain sump 18. It is also possible to prevent reduction in heat removal performance caused by mixing of a concrete component into the molten fuel 11 because the molten fuel 11 is prevented from being brought into direct contact with the lower drywell floor concrete 13, and therefore it is possible to cool the molten fuel 11 also by injecting water from a portion above the molten fuel 11 as described below.

Furthermore, because the floor surface gap 14a is provided between the lower drywell floor concrete 13 and the floor protection material 12a and the wall surface gap 14b is provided between the pedestal internal tubular steel plate 9a and the wall protection material 12b, it is possible to delay transmission of heat to the lower drywell floor concrete 13 and the pedestal internal tubular steel plate 9a from the molten fuel 11 received by the protection materials 12a and 12b and the side surface portion of the sump cover 18a.

Water is injected into the lower drywell 5 via the water injection mechanism 15 before the lower drywell floor concrete 13 and the pedestal internal tubular steel plate 9a are damaged by the heat of the molten fuel 11 and the floor surface gap 14a and the wall surface gap 14b are filled with cooling water, and, in addition, the molten fuel 11 is directly cooled from a portion thereabove by cooling water overflowing from the wall protection material 12b. This makes it possible to maintain strength of the lower drywell floor concrete 13 and the pedestal internal tubular steel plate 9a at the time of occurrence of a serious accident and therefore maintain the function of supporting the reactor pressure vessel 2. Note that, because injection of water to the lower drywell 5 is not implemented at the time of normal operation, a leakage detection function of the drain sump 18 is not hindered at the time of normal operation.

### [Example 2]

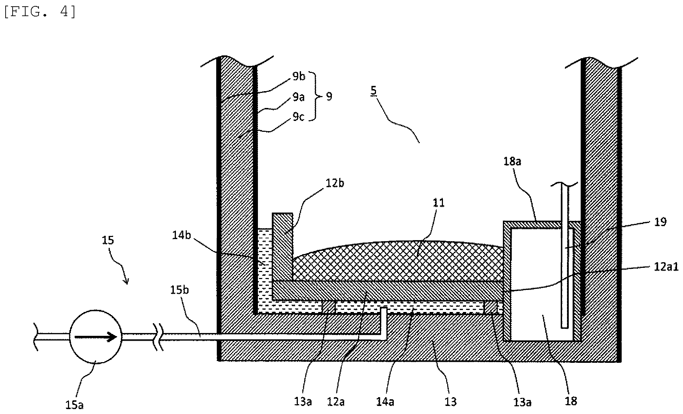

Fig. 4 is a vertical sectional view of the lower drywell 5 according to Example 2 of the invention. The lower drywell 5 in Fig. 4 is different from the above lower drywell 5 according to Example 1 (see Fig. 2) in that an outlet-side opening portion of the water injection line 15b is located in a floor surface of the lower drywell 5.

Also in the primary containment vessel 3 configured as described above, the same effect as that of Example 1 can be exerted. Further, cooling water supplied via the water injection pump 15a first flows into a portion below the floor protection material 12a where a contact area with the molten fuel 11 is large and a temperature is the highest, and therefore it is possible to improve a cooling effect of the molten fuel 11.

### [Example 3]

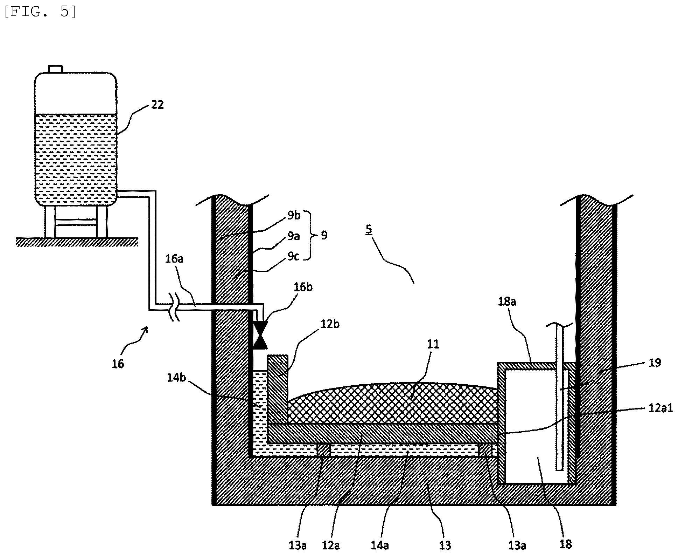

Fig. 5 is a vertical sectional view of the lower drywell 5 according to Example 3 of the invention. The lower drywell 5 in Fig. 5 is different from the above lower drywell according to Example 1 (see Fig. 2) in that a water injection mechanism 16 includes a water injection line 16a directly connected to an external water source 22 and a fusible valve 16b provided in the vicinity of an opening portion of the water injection line 16a. Note that the vent pipe 8 located outside the lower drywell 5, the suppression chamber 6, or the like may also be used instead of the external water source 22 as long as a water level of the water source is higher than the fusible valve 16b.

In the primary containment vessel 3 configured as described above, the fusible valve 16b is opened by heat of the molten fuel 11 falling in the lower drywell 5 and therefore cooling water is injected to the wall surface gap 14b and the floor surface gap 14a from the external water source 22, the suppression chamber 6, or the like. Thus, the pedestal 9 is protected from the heat of the molten fuel 11 falling in the lower drywell 5 at the time of occurrence of a serious accident, and therefore it is possible to maintain the function of supporting the reactor pressure vessel 2, which is similar to Example 1. Furthermore, the water injection mechanism 16 does not need a power source, and therefore, even in the case where a power source is lost at the time of occurrence of a serious accident, it is possible to operate the water injection mechanism 16.

### [Example 4]

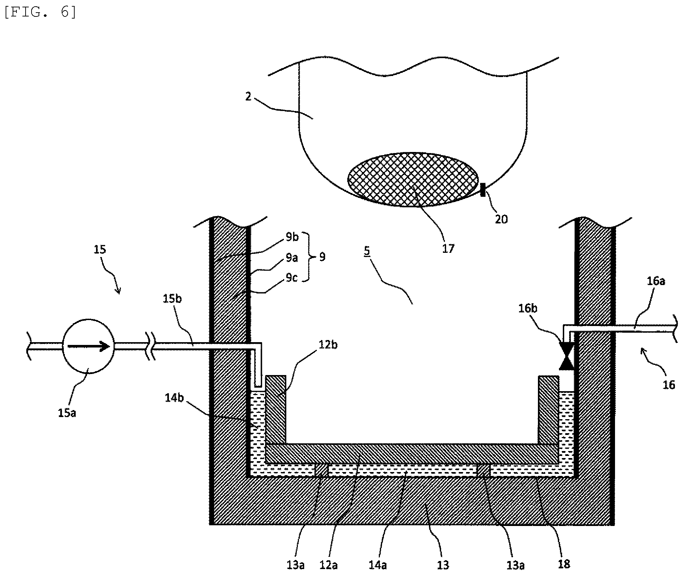

Fig. 6 is a vertical sectional view of the lower drywell 5 according to Example 4 of the invention. The lower drywell 5 in Fig. 6 is different from the above lower drywell 5 according to Example 1 (see Fig. 2) in that a water injection mechanism 16 including a water injection line 16a directly connected to the external water source 22, the suppression chamber 6, or the like and a fusible valve 16b provided in the vicinity of an opening portion of the water injection line 16a is further provided and a sign of breakage of the reactor pressure vessel 2 is detected and water is injected into the floor surface gap 14a and the wall surface gap 14b via the water injection mechanism 15 before a molten fuel 17 falls in the lower drywell 5. Note that illustration of the drain sump 18 is omitted in Fig. 6.

In the case where a serious accident occurs, it is expected that the reactor pressure vessel 2 has a high temperature and a hydrogen concentration in the primary containment vessel 3 is increased. Therefore, the sign of breakage of the reactor pressure vessel 2 can be detected by detecting any one of or both the following points: excess of a temperature measured by a thermometer 20 provided at the bottom of the reactor pressure vessel 2 over a predetermined temperature; and excess of a hydrogen concentration measured by a hydrogen concentration meter 21 (see Fig. 1) provided in the suppression chamber 6, the upper drywell 4, or the like over a predetermined concentration. In the case where the sign of breakage of the reactor pressure vessel 2 is detected, the water injection pump 15a is driven and water is injected by the water injection mechanism 15. After the reactor pressure vessel 2 is broken and the molten fuel 17 falls, the fusible valve 16b is opened by heat from the molten fuel 11 that has fallen and water is injected by the water injection mechanism 16 in the same way as the lower drywell 5 (see Fig. 5) according to Example 3.

Because the lower drywell 5 according to this example includes the static water injection mechanism 16 that detects the heat from the molten fuel 11 that has fallen and starts injection of water, an amount of water injected by the water injection mechanism 15 when the sign of breakage of the reactor pressure vessel 2 is detected can be controlled so as not to exceed the height of the wall protection material 12b as illustrated in Fig. 6. Thus, the amount of water injected before the molten fuel 17 falls is controlled so as not to form a water pool in the lower drywell 5, and therefore it is possible to reduce a risk of breakage of the primary containment vessel 3 caused by steam explosion or sudden generation of steam.

Also in this example configured as described above, the same effect as that of Example 1 can be exerted. Further, because water is injected before the reactor pressure vessel 2 is broken, it is possible to eliminate a time lag between fall of the molten fuel 17 and start of injection of water. This makes it possible to cool the protection materials 12a and 12b immediately after the molten fuel 17 falls, and therefore the protection materials 12a and 12b can be made of not only ceramics, a carbonized material such as silicon carbide, or a refractory material such as tungsten but also a high thermal conductive material such as SUS or iron.

Note that the invention is not limited to the above examples and includes various modification examples within the scope of the invention. For example, the invention is not limited to an invention having all the configurations described in the above examples and also includes an invention obtained by removing part of the configurations. Further, part of a configuration according to a certain example may be added to or replaced with a configuration according to another example.

### Reference Signs List

1 ... reactor core, 2 ... reactor pressure vessel, 3 ... primary containment vessel, 4 ... upper drywell, 5 ... lower drywell, 6 ... suppression chamber, 7 ... diaphragm floor, 8 ... vent pipe, 9 ... pedestal, 9a ... pedestal internal tubular steel plate, 9b ... pedestal external tubular steel plate, 9c ... pedestal concrete, 11 ... molten fuel (after falling), 12a ... floor protection material, 12a1 ... cutout end surface, 12b ... wall protection material, 12b1, 12b2 ... side end surface, 13 ... lower drywell floor concrete, 13a ... support member, 14a ... floor surface gap, 14b ... wall surface gap, 15 ... water injection mechanism, 15a ... water injection pump, 15b ... water injection line, 16 ... water injection mechanism, 16a ... water injection line, 16b ... fusible valve, 17 ... molten fuel (before falling), 18 ... drain sump, 18a ... sump cover, 19 ... drain piping, 20 ... thermometer, 21 ... hydrogen concentration meter, 22 ... external water source

## Claims

1. A primary containment vessel (3), including
a reactor pressure vessel (2),
a pedestal (9) for supporting the reactor pressure vessel,
a lower drywell (5) positioned to be lower than the reactor pressure vessel (2) and formed on an inner side in a radial direction of the pedestal (9),
an upper drywell (4) located on an outer side in a radial direction of the reactor pressure vessel (2) and separated from the lower drywell (5) by a diaphragm floor (7),
a suppression chamber (6) for storing coolant, the suppression chamber (6) being located to be lower than the upper drywell (4) on an outer side in the radial direction of the pedestal (9), and
a drain sump (18) provided on a floor portion of the lower drywell (5),
the primary containment vessel (3) comprising:
a sump cover (18a) for covering the drain sump (18) from above a floor surface of the lower drywell (5);
a floor protection material (12a) integrally formed with the sump cover (18a) and supported to form a floor surface gap (14a) with the floor surface of the lower drywell (5);
a wall protection material (12b) integrally formed with the sump cover (18a) and erected on an upper surface outer edge portion of the floor protection material (12a) to form a wall surface gap (14b) with an inner wall surface of the pedestal (9); and
a water injection mechanism (15) for injecting cooling water into the floor surface gap (14a) and the wall surface gap (14b),
**characterized in that**
the water injection mechanism (15) includes a water injection pump (15a) and a water injection line (15b) for introducing the cooling water supplied through the water injection pump (15a) to the wall surface gap (14b), and
the primary containment vessel further comprises
a sign detection device for detecting a sign of breakage of the reactor pressure vessel, wherein
the water injection pump (15a) injects water when the sign of breakage of the reactor pressure vessel (2) is detected by the sign detection device.

2. The primary containment vessel (3) according to claim 1, wherein
an outlet-side opening portion of the water injection line (15b) is located in the floor surface of the lower drywell (5).

3. The primary containment vessel (3) according to claim 1 or claim 2, wherein
the sign detection device includes a thermometer (20) provided at the bottom of the reactor pressure vessel (2) and detects, as a sign of malfunction of the reactor pressure vessel, excess of a temperature measured by the thermometer (20) over a predetermined temperature.

4. The primary containment vessel (3) according to claim 1 or claim 2, wherein
the sign detection device includes a hydrogen concentration meter (21) provided in the primary containment vessel (3) and detects, as a sign of malfunction of the reactor pressure vessel, excess of a hydrogen concentration measured by the hydrogen concentration meter (21) over a predetermined hydrogen concentration.

## Patentansprüche

1. Primärer Sicherheitsbehälter (3) mit
einem Reaktordruckbehälter (2),
einem Sockel (9) zum Tragen des Reaktordruckbehälters,
einer unteren Druckkammer (5), die niedriger als der Reaktordruckbehälter (2) positioniert und auf einer Innenseite in einer radialen Richtung des Sockels (9) ausgebildet ist,
einer oberen Druckkammer (4), die sich auf einer Außenseite in einer radialen Richtung des Reaktordruckbehälters (2) befindet und von der unteren Druckkammer (5) durch einen Diaphragmaboden (7) getrennt ist,
einer Unterdrückungskammer (6) zum Speichern von Kühlmittel, wobei die Unterdrückungskammer (6) niedriger als die obere Druckkammer (4) auf einer Außenseite in der radialen Richtung des Sockels (9) angeordnet ist, und
einer Abflusswanne (18), die auf einem Bodenabschnitt der unteren Druckkammer (5) vorgesehen ist,
wobei der primäre Sicherheitsbehälter (3) umfasst:
eine Wannenabdeckung (18a) zum Abdecken der Abflusswanne (18) von oberhalb einer Bodenfläche der unteren Druckkammer (5) ;
ein Bodenschutzmaterial (12a), das einstückig mit der Wannenabdeckung (18a) ausgebildet ist und so getragen ist, dass es eine Bodenflächenlücke (14a) mit der Bodenfläche der unteren Druckkammer (5) bildet;
ein Wandschutzmaterial (12b), das einstückig mit der Wannenabdeckung (18a) ausgebildet ist und auf einem äußeren Kantenabschnitt der oberen Fläche des Bodenschutzmaterials (12a) steht, um eine Wandflächenlücke (14b) mit einer Innenwandfläche des Sockels (9) zu bilden; und
einen Wasserinjektionsmechanismus (15) zum Injizieren von Kühlwasser in die Bodenflächenlücke (14a) und die Wandflächenlücke (14b),
**gekennzeichnet dadurch, dass**
der Wasserinjektionsmechanismus (15) eine Wasserinjektionspumpe (15a) und eine Wasserinjektionsleitung (15b) zum Einführen des durch die Wasserinjektionspumpe (15a) zugeführten Kühlwassers in die Wandflächenlücke (14b) enthält und
der primäre Sicherheitsbehälter ferner umfasst:
eine Anzeichendetektionsvorrichtung zum Detektieren eines Anzeichens für Aufbrechen des Reaktordruckbehälters, wobei
die Wasserinjektionspumpe (15a) Wasser injiziert, wenn das Anzeichen für das Aufbrechen des Reaktordruckbehälters (2) von der Anzeichendetektionsvorrichtung detektiert wird.

2. Primärer Sicherheitsbehälter (3) nach Anspruch 1, wobei
ein Auslassseiten-Öffnungsabschnitt der Wasserinjektionsleitung (15b) in der Bodenfläche der unteren Druckkammer (5) angeordnet ist.

3. Primärer Sicherheitsbehälter (3) nach Anspruch 1 oder Anspruch 2, wobei
die Anzeichendetektionsvorrichtung ein am Boden des Reaktordruckbehälters (2) angeordnetes Thermometer (20) enthält und als ein Anzeichen einer Fehlfunktion des Reaktordruckbehälters das Überschreiten einer vom Thermometer (20) gemessenen Temperatur über eine vorgegebene Temperatur detektiert.

4. Primärer Sicherheitsbehälter (3) nach Anspruch 1 oder Anspruch 2, wobei
die Anzeichendetektionsvorrichtung eine im primären Sicherheitsbehälter (3) angeordnete Wasserstoffkonzentration-Messeinrichtung (21) enthält und als ein Zeichen einer Fehlfunktion des Reaktordruckbehälters das Überschreiten einer von der Wasserstoffkonzentration-Messeinrichtung (21) gemessenen Wasserstoffkonzentration über eine vorgegebene Wasserstoffkonzentration detektiert.

## Revendications

1. Cuve de confinement primaire (3), incluant :
une cuve de réacteur sous pression (2),
un pilier (9) pour supporter la cuve de réacteur sous pression,
un puits sec inférieur (5) positionné pour être plus bas que la cuve de réacteur sous pression (2) et formé sur un côté intérieur dans une direction radiale du pilier (9),
un puits sec supérieur (4) situé sur un côté extérieur dans une direction radiale de la cuve de réacteur sous pression (2) et séparé du puits sec inférieur (5) par un plancher à membrane (7),
une chambre de suppression (6) pour stocker du fluide de refroidissement, la chambre de suppression (6) étant positionnée pour être plus basse que le puits sec supérieur (4) sur un côté extérieur dans la direction radiale du pilier (9), et
un puisard de drainage (18) agencé sur une partie de plancher du puits sec inférieur (5),
la cuve de confinement primaire (3) comportant :
un couvercle de puisard (18a) pour recouvrir le puisard de drainage (18) à partir du dessus d'une surface de plancher du puits sec inférieur (5),
un matériau de protection de plancher (12a) formé solidaire du couvercle de puisard (18a) et supporté pour former un espace de surface de plancher (14a) avec la surface de plancher du puits sec inférieur (5),
un matériau de protection de paroi (12b) formé solidaire du couvercle de puisard (18a) et monté sur une partie de bord extérieur de surface supérieure du matériau de protection de plancher (12a) pour former un espace de surface de paroi (14b) avec une surface de paroi intérieure du pilier (9), et
un mécanisme d'injection d'eau (15) pour injecter de l'eau de refroidissement dans l'espace de surface de plancher (14a) et un espace de surface de paroi (14b),
**caractérisée** ce que
le mécanisme d'injection d'eau (15) inclut une pompe d'injection d'eau (15a) et une ligne d'injection d'eau (15b) pour introduire l'eau de refroidissement fournie par la pompe d'injection d'eau (15a) à l'espace de surface de paroi (14b), et
la cuve de confinement primaire comporte en outre :
un dispositif de détection de signe pour détecter un signe de rupture la cuve de réacteur sous pression, dans laquelle
la pompe d'injection d'eau (15a) injecte de l'eau lorsque le signe de rupture de la cuve de réacteur sous pression (2) est détecté par le dispositif de détection de signe.

2. Cuve de confinement primaire (3) selon la revendication 1, dans laquelle
une partie d'ouverture côté sortie de la ligne d'injection d'eau (15b) est située dans la surface de plancher du puits sec inférieur (5).

3. Cuve de confinement primaire (3) selon la revendication 1 ou la revendication 2, dans laquelle
le dispositif de détection de signe inclut un thermomètre (20) agencé au fond de la cuve de réacteur sous pression (2) et détecte, comme un signe de dysfonctionnement de la cuve de réacteur sous pression, un excès d'une température mesurée par le thermomètre (20) au-dessus d'une température prédéterminée.

4. Cuve de confinement primaire (3) selon la revendication 1 ou la revendication 2, dans laquelle
le dispositif de détection de signe inclut un mesureur de concentration d'hydrogène (21) agencé dans la cuve de confinement primaire (3) et détecte, comme un signe de dysfonctionnement de la cuve de réacteur sous pression, un excès d'une concentration d'hydrogène mesurée par le mesureur de concentration d'hydrogène (21) au-dessus d'une concentration d'hydrogène prédéterminée.
